(19) Europäisches Patentamt
European Patent Office
Office européen des brevets

(11) **EP 2 071 149 B1**

(12) **EUROPEAN PATENT SPECIFICATION**

(45) Date of publication and mention
of the grant of the patent:
**02.12.2015 Bulletin 2015/49**

(51) Int Cl.:
*F01N 9/00* *(2006.01)*     *F01N 3/20* *(2006.01)*

(21) Application number: **08160069.4**

(22) Date of filing: **10.07.2008**

(54) **System for controlling urea injection of selective catalyst reduction apparatus and method thereof**

System zur Steuerung der Harnstoffinjektion eines selektiven Katalysatorreduktionsgeräts und Verfahren dafür

Système pour contrôler l'injection d'urée d'un appareil de réduction de catalyseur sélectif et procédé correspondant

(84) Designated Contracting States:
**DE**

(30) Priority: **14.12.2007 KR 20070131623**

(43) Date of publication of application:
**17.06.2009 Bulletin 2009/25**

(73) Proprietor: **Hyundai Motor Company**
**Seoul (KR)**

(72) Inventor: **Cho, Ji Ho**
**Gyeonggi-do (KR)**

(74) Representative: **Viering, Jentschura & Partner**
**Patent- und Rechtsanwälte**
**Grillparzerstrasse 14**
**81675 München (DE)**

(56) References cited:
**EP-A1- 1 712 764       WO-A1-2008/006984**
**WO-A2-2008/009940**

## Description

## CROSS-REFERENCE TO RELATED APPLICATION

This application claims priority to and the benefit of Korean Patent Application No. 10-2007-0131623 filed in the Korean Intellectual Property Office on December 14, 2007.

## BACKGROUND OF THE INVENTION

## (a) Field of the Invention

The present invention relates to a selective catalyst apparatus that is equipped in an exhaust system of a vehicle, and more particularly to a system for controlling urea injection of a selective catalyst reduction apparatus and method thereof.

## (b) Description of the Related Art

Exhaust gas that is exhausted out of an engine passes through a catalytic reduction system that is disposed in an exhaust pipe and is purified therein, and noise thereof is reduced while passing through the muffler and is expelled to atmosphere through a tail pipe.

In a diesel engine, a catalyst apparatus that is a type of DPF (diesel particulate filter) treats pollution materials that are included in the exhaust gas.

The catalyst is disposed inside the catalyst apparatus to collect particle materials (PM) that are included in the exhaust gas and purifies the various gasses in the exhaust through chemical conversion processes.

The selective catalyst reduction apparatus is a type of catalyst apparatus that is stated above.

The selective catalytic reduction system uses ammonia ($NH_3$) as a reducing agent so as to reduce NOx that is exhausted out of the diesel vehicle in large quantity.

The ammonia has a good selectiveness to the NOx, and in addition, the ammonia has a merit in that it reacts well with the NOx in the presence of oxygen.

The reaction formula thereof is as follows.

$$NOx + NH_3 \text{ (ammonia)} \rightarrow N_2 + H_2O$$

A urea solution is injected upstream of the selective catalytic reduction system, and the ammonia is created through vaporization and resolution thereof.

Generally, as the injection amount of the urea solution is increased, the NOx reduction rate increases. However, when the amount of injected urea solution is more than a predetermined amount, some ammonia is expelled to atmosphere. Accordingly, serious environmental pollution occurs.

Particularly, the ammonia causes an offensive odor, so the quality of the vehicle is deteriorated.

Accordingly, it is very important to increase the reduction rate of the NOx while sustaining an appropriate injection amount of the urea solution.

The prevailing method, so as to increase the NOx reduction rate of the selective catalyst apparatus, includes calculating the NOx amount included in the exhaust gas from the engine speed and the temperature of the exhaust gas, and determining the appropriate urea solution injection amount.

However, this method cannot actively calculate the NOx amount against a fluctuating load according to acceleration and deceleration of the driver. Accordingly, there is a drawback in that it does not uniformly control the urea injection amount.

Also, the acceleration and deceleration are repeated under actual driving conditions, and thereby the actual NOx amount that is generated can be different from NOx map data.

Also, there is a problem in that the appropriate amount of the urea solution is not injected.

When excessive urea solution is injected, the ammonia is exhausted to atmosphere such that secondary pollution occurs, and there is a problem in the need to use a second or a third catalyst so as to prevent the pollution.

In contrast, when the injection amount of the urea solution is insufficient, the NOx reduction rate is deteriorated.

The above information disclosed in this Background section is only for enhancement of understanding of the background of the invention and therefore it may contain information that does not form the prior art that is already known in this country to a person of ordinary skill in the art.

EP 1 712 764 A1 discloses a method and control system for a diesel engine equipped with an SCR system for reducing the nitrogen oxide content in the exhaust gases of said engine.

## SUMMARY OF THE INVENTION

The present invention provides a system for controlling urea injection of a selective catalyst reduction apparatus as defined in claim 1, as well as a method for controlling urea injection of a selective catalyst reduction apparatus as defined in claim 7. Further embodiments of the invention are defined in the dependent claims. Thus, embodiments of the present invention provide a system for controlling urea injection of a selective catalyst reduction apparatus having advantages of enhancing the reduction efficiency of NOx by applying a wall-wetted urea solution amount.

The system for controlling urea injection of the selective catalyst reduction apparatus includes a catalyst apparatus that reduces NOx included in exhaust gas, a control portion that determines a necessary ammonia amount by applying first driving conditions to a predetermined NOx map and determines a final urea solution amount that is to be injected to the catalyst apparatus, based on the necessary ammonia amount, and an injector that injects the determined final urea solution amount to the catalyst apparatus, wherein the control portion controls the injector to inject the determined final urea solution, and the control portion determines a necessary urea solution amount by applying an ammonia conversion coefficient of the urea solution to the determined necessary ammonia amount, and determines the final urea solution amount by applying a total wall-wetted urea solution amount to the determined necessary urea solution amount. The ammonia conversion coefficient of urea solution may be 0.1955. The first driving conditions may include at least one of engine speed, temperature of the exhaust gas, exhaust gas amount and combustion pressure. The control portion determines the total wall-wetted urea solution amount by applying second driving conditions to a map value and calculating a wall-wetted amount and calculating the total wall-wetted amount by integrating the calculated wall-wetted amount. The control portion may apply a wall vaporization amount to the calculated total wall-wetted amount and determines the total wall-wetted urea solution amount. The second driving condition may include at least one of an exhaust gas temperature, exhaust gas flux, and injection amount. The control portion may control the injector with intermittent on/off pulse signals.

The method for controlling urea injection of a selective catalyst reduction apparatus comprises detecting first driving conditions of a vehicle, determining a necessary ammonia amount by applying the first driving conditions of the vehicle to a predetermined NOx map, determining a necessary urea solution amount by applying an ammonia conversion coefficient of urea solution to the determined necessary ammonia amount, and determining a final urea injection solution amount that is to be finally injected by applying a total wall-wetted urea solution amount to the determined necessary urea solution amount, wherein the total wall-wetted urea solution amount is determined by applying second driving conditions to a map value and calculating a wall-wetted amount and calculating a total wall-wetted amount by integrating the calculated wall-wetted amount. The first driving conditions may include at least one of engine speed, temperature of the exhaust gas, exhaust gas amount and combustion pressure. The ammonia conversion coefficient of urea solution may be 0.1955.

In other exemplary embodiment of the present invention, a method for controlling urea injection of a selective catalyst reduction apparatus may further comprise applying a wall vaporization amount to the calculated total wall-wetted amount and determining the total wall-wetted urea solution amount. The second driving condition may include at least one of an exhaust gas temperature, exhaust gas flux, and injection amount.

The accurate urea solution amount that is necessary in the selective catalyst apparatus is determined and injected according to the present invention by the above-stated composition, and thereby the urea solution consumption is minimized and the reduction efficiency is enhanced.

Also, an optimal urea solution amount is injected in the selective catalyst apparatus such that the ammonia is not excessively or deficiently generated.

## BRIEF DESCRIPTION OF THE DRAWINGS

FIG. 1 is a drawing showing a system for controlling urea injection of a selective catalyst reduction apparatus according to an exemplary embodiment of the present invention.

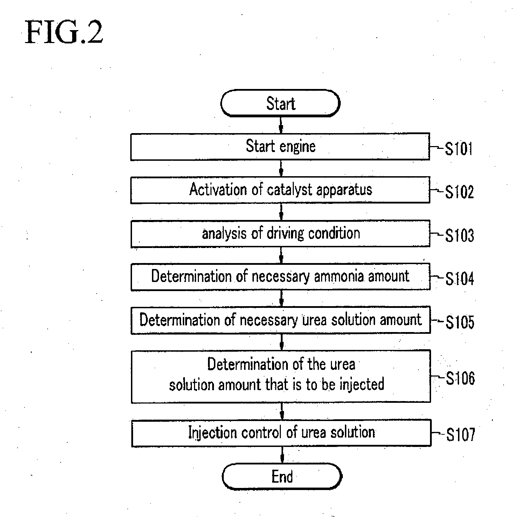

FIG. 2 is a flowchart showing a method for controlling urea injection of a selective catalyst reduction apparatus according to an exemplary embodiment of the present invention.

FIG. 3 is a flowchart showing a method for calculating urea solution amount that vaporizes at a wall of a selective catalyst apparatus of a vehicle exhaust system according to an exemplary embodiment of the present invention.

<Representative Reference Numerals>

| | |
|---|---|
| 2: engine | 6: exhaust pipe |
| 10: catalyst apparatus | 12: first catalyst |
| 14: SCR catalyst | 16: temperature sensor |
| 20: injector | 24: control portion |
| 30: urea tank | 32: pump |

## DETAILED DESCRIPTION OF THE EMBODIMENTS

In the following detailed description, only certain exemplary embodiments of the present invention have been shown and described, simply by way of illustration.

As those skilled in the art would realize, the described embodiments may be modified in various different ways, all without departing from the spirit or scope of the present invention, and the drawings and description are to be regarded as illustrative in nature and not restrictive.

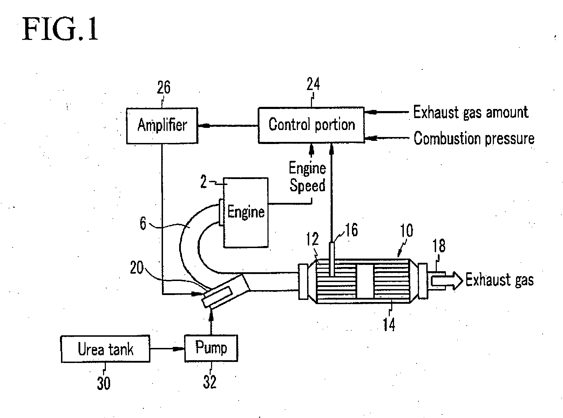

Referring to FIG. 1, the system for controlling urea injection of the selective catalyst reduction apparatus includes an engine 2 as a power source, an exhaust pipe 6, a catalyst apparatus 10, an injector 20, a control portion 24, an amplifier 26, a urea tank 30, and a pump 32.

The catalyst apparatus 10 that is disposed at one end portion of the exhaust pipe 6 connected to the engine 2 includes a first catalyst 12 that includes DOC and CPF, and an SCR catalyst 14 that is disposed downstream of the first catalyst 12 and includes $V_2O_5/TiO_2$, $Pt/Al_2O_3$, or zeolite.

The catalyst apparatus 10 purifies the pollution materials that are included in the exhaust gas and exhausts the gas through an exhaust pipe 18.

Also, the catalyst apparatus 10 purifies NOx by chemical reaction through which ammonia reacts with the NOx, and the ammonia is generated by the urea solution therein.

A temperature sensor 16 is disposed in the catalyst apparatus 10, and the temperature sensor 16 transfers temperature data of the exhaust gas to the control portion 24.

The control portion 24 detects engine speed, temperature of the exhaust gas, the exhaust gas amount, and combustion pressure, and analyzes driving conditions. The reduction efficiency of the NOx is calculated, and a necessary ammonia amount ($m_{NH3}$) is determined based on a predetermined NOx map according to the driving conditions.

Further, the control portion 24 determines a necessary urea solution amount ($m_{Urea}$) according to the necessary ammonia amount ($m_{NH3}$). Also, the urea solution that is additionally injected in consideration of a wall-wetted amount is injected through the injector, wherein some of the urea solution is wetted on the wall of the catalyst apparatus.

As shown in the following Equation 1, the necessary urea solution amount ($m_{Urea}$) is determined by mathematically dividing the necessary ammonia amount ($m_{NH3}$) that is calculated by the reduction efficiency of the NOx with a positive coefficient value ($r_{UreaToNH3}$ = 0.1955) that the urea solution can transform to ammonia.

$$\text{(Equation 1)}$$

$$m_{Urea} = m_{NH3} \div r_{UreaToNH3}$$

Also, as known from the following Equation 2, the urea solution injection amount ($m_{UreaSolution}$) is determined by dividing the necessary urea solution amount ($m_{Urea}$) that is determined from the above Equation 1 with total wall-wetted urea solution amount ($m_{Urea\_wall}$) of the injector.

$$\text{(Equation 2)}$$

$$m_{UreaSolution} = m_{Urea} \div m_{Urea\_Wall}$$

The total wall-wetted urea solution amount ($m_{Urea}$) is explained later.

The control portion 24 controls the injector 20 based on intermittent on/off pulse signals to inject the urea solution into the catalyst apparatus.

The amplifier 26 receives the pulse signals from the control portion 24 that controls the injection amount of the urea solution, amplifies the pulse signals to a predetermined level, and sends the amplified pulse signals to the injector 20.

The pump 32 pressurizes the urea solution that is supplied from the urea tank 30 to the injector 20 so as to inject it in a high pressure condition.

The injector 20 is operated according to the on/off pulse signal that is transferred through the amplifier 26 and supplies the predetermined urea solution amount to the catalyst apparatus 10.

In the selective catalyst apparatus of a vehicle exhaust system, a method for controlling the injection of urea solution is described hereinafter according to the present invention that includes the above function.

The engine is started (S101), and when the selective catalyst apparatus is activated, the control portion 24 detects the driving conditions that include at least one of engine speed, temperature of the exhaust gas, exhaust gas amount, combustion pressure, and so on (S103).

Then, the reduction efficiency of the NOx is calculated from the NOx map by applying the driving conditions, and thereby the necessary ammonia amount is determined (S104).

The necessary urea solution amount ($m_{Urea}$) is determined through Equation 1 according to the necessary ammonia amount (S105). That is, the necessary ammonia amount ($m_{NH3}$) is divided by the coefficient value ($r_{UreaToNH3}$ = 0.1955), and thereby the necessary urea solution amount ($m_{Urea}$) is determined.

When the necessary urea solution amount ($m_{Urea}$) is determined in the above, the urea solution injection amount ($m_{UreaSolution}$) that is to be injected to the catalyst apparatus 10 is determined through Equation 2 (S 106). That is, the total wall-wetted urea solution amount ($m_{Urea\_Wall}$) is additionally considered in the necessary urea solution amount ($m_{Urea}$) that is determined in step S105.

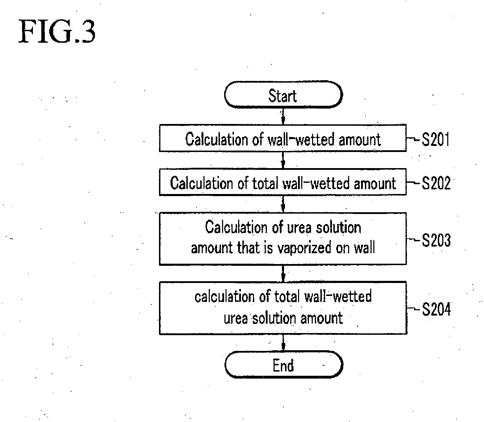

The total wall-wetted urea solution amount ($m_{Urea\_Wall}$) can be calculated as the steps shown in FIG.3.

At first, the wall-wetted amount is calculated (S201) by applying a map value according to driving conditions including at least one of an exhaust gas temperature, exhaust gas flux, and injection amount (S201) and the total wall-wetted amount is calculated by mathematically integrating the calculated wall-wetted amount (S202). Finally, the total urea solution amount ($m_{Urea\_Wall}$) is determined by applying the vaporization amount to the total wall-wetted amount (S203).

As described above, when the urea solution amount is determined, the control portion 24 controls the injector 20 by on/off pulse signals through the amplifier 26 so as to inject the urea solution to the catalyst apparatus 10.

Accordingly, the optimal ammonia amount is generated corresponding to the present engine conditions and thereby the reduction efficiency of the NOx can be improved and the ammonia is not expelled to atmosphere, and as a result, the quality of the vehicle is improved.

**Claims**

1. A system for controlling urea injection of a selective catalyst reduction apparatus, comprising:

   a catalyst apparatus (10) that reduces NOx included in exhaust gas;
   a control portion (24) that determines a necessary ammonia amount by applying first driving conditions to a predetermined NOx map and determines a final urea solution amount (m Urea Solution) that is to be injected to the catalyst apparatus, based on the necessary ammonia amount; and
   an injector (20) that injects the determined final urea solution amount to the catalyst apparatus (10),
   wherein the control portion (24) controls the injector (20) to inject the determined final urea solution,
   wherein the control portion (24) determines a necessary urea solution amount (m Urea) by applying an ammonia conversion coefficient of the urea solution to the determined necessary ammonia amount, (m NH$_3$) and determines the final urea solution amount by applying a total wall-wetted urea solution amount (m Urea-wall) to the determined necessary urea solution amount (m Urea), wherein some of the urea solution is wetted on the wall of the catalyst apparatus (10); and
   wherein the control portion (24) determines the total wall-wetted urea solution amount (m Urea-wall) by applying second driving conditions to a map value and calculating a wall-wetted amount and calculating the total wall-wetted amount by integrating the calculated wall-wetted amount.

2. The system for controlling urea injection of a selective catalyst reduction apparatus of claim 1, wherein the ammonia conversion coefficient of urea solution is 0.1955.

3. The system for controlling urea injection of a selective catalyst reduction apparatus of claim 1, wherein the first driving conditions include at least one of engine speed, temperature of the exhaust gas, exhaust gas amount and combustion pressure.

4. The system for controlling urea injection of a selective catalyst reduction apparatus of claim 1, wherein the control portion (24) applies a wall vaporization amount to the calculated total wall-wetted amount and determines the total wall-wetted urea solution amount.

**5.** The system for controlling urea injection of a selective catalyst reduction apparatus of claim 1, wherein the second driving condition includes at least one of an exhaust gas temperature, exhaust gas flux, and injection amount.

**6.** The system for controlling urea injection of a selective catalyst reduction apparatus of claim 1, wherein the control portion (24) controls the injector (20) with intermittent on/off pulse signals.

**7.** A method for controlling urea injection of a selective catalyst reduction apparatus, comprising:

detecting first driving conditions of a vehicle (S103);
determining a necessary ammonia amount (m $NH_3$) by applying the first driving conditions of the vehicle to a predetermined NOx map (S104);
determining a necessary urea solution amount (m Urea) by applying an ammonia conversion coefficient of urea solution to the determined necessary ammonia amount (S105); and
determining a final urea injection solution amount that is to be finally injected by applying a total wall-wetted urea solution amount (m Urea-wall) to the determined necessary urea solution amount (m Urea) (S106), wherein some of the urea solution is wetted on the wall of the catalyst apparatus (10);
wherein the total wall-wetted urea solution amount (m Urea-wall) is determined by applying second driving conditions to a map value and calculating a wall-wetted amount (S201) and calculating the total wall-wetted amount by integrating the calculated wall-wetted amount (S202).

**8.** The method for controlling urea injection of a selective catalyst reduction apparatus of claim 7, wherein the first driving conditions include at least one of engine speed, temperature of the exhaust gas, exhaust gas amount and combustion pressure.

**9.** The method for controlling urea injection of a selective catalyst reduction apparatus of claim 7, wherein the ammonia conversion coefficient of urea solution is 0.1955.

**10.** The method for controlling urea injection of a selective catalyst reduction apparatus of claim 9, further comprising:

applying a wall vaporization amount to the calculated total wall-wetted amount (S203) and determining the total wall-wetted urea solution amount (S204).

**11.** The method for controlling urea injection of a selective catalyst reduction apparatus of claim 10, wherein the second driving condition includes at least one of an exhaust gas temperature, exhaust gas flux, and injection amount.

## Patentansprüche

**1.** Ein System zum Steuern einer Harnstoffeinspritzung einer selektive-katalytische-Reduktion-Vorrichtung, aufweisend:

eine Katalysatorvorrichtung (10), welche NOx reduziert, welches in Abgas enthalten ist,
einen Steuerabschnitt (24), welcher eine notwendige Ammoniakmenge ermittelt durch Anwenden erster Fahrzustände auf ein vorgegebenes NOx-Kennfeld und eine Harnstofflösung-Endmenge ($m_{Harnsfofflösung}$) ermittelt, welche in die Katalysatorvorrichtung einzuspritzen ist, basierend auf der notwendigen Ammoniakmenge, und
einen Injektor (20), welcher die ermittelte Harnstofflösung-Endmenge in die Katalysatorvorrichtung (10) einspritzt,
wobei der Steuerabschnitt (24) den Injektor (20) steuert, um die ermittelte Endharnstofflösung einzuspritzen,
wobei der Steuerabschnitt (24) eine notwendige Harnstofflösung-Menge ($m_{Harnstoff}$) ermittelt durch Anwenden eines Ammoniak-Umwandlung-Koeffizienten der Harnstofflösung auf die ermittelte notwendige Ammoniakmenge ($m_{NH3}$) und die Harnstofflösung-Endmenge ermittelt durch Anwenden einer wandbenetzende-Harnstofflösung-Gesamtmenge ($m_{Harnstoff\_Wand}$) auf die ermittelte notwendige Harnstofflösung-Menge ($m_{Harnstoff}$), wobei ein Teil der Harnstofflösung die Wand der Katalysatorvorrichtung (10) benetzt, und
wobei der Steuerabschnitt (24) die wandbenetzende-Harnstofflösung-Gesamtmenge ($m_{Harnstoff\_Wand}$) ermittelt durch Anwenden zweiter Fahrzustände auf einen Kennfeldwert und Berechnen einer wandbenetzende-Menge und Berechnen der wandbenetzende-Gesamtmenge durch Integrieren der berechneten wandbenetzende-Menge.

**2.** Das System zum Steuern einer Harnstoffeinspritzung einer selektive-katalytische-Reduktion-Vorrichtung nach Anspruch 1, wobei der Ammoniak-Umwandlung-Koeffizient der Harnstofflösung 0,1955 ist.

**3.** Das System zum Steuern einer Harnstoffeinspritzung einer selektive-katalytische-Reduktion-Vorrichtung nach Anspruch 1, wobei die ersten Fahrzustände zumindest einen von Verbrennungsmotordrehzahl, Abgastemperatur, Abgasmenge und Verbrennungsdruck aufweisen.

**4.** Das System zum Steuern einer Harnstoffeinspritzung einer selektive-katalytische-Reduktion-Vorrichtung nach Anspruch 1, wobei der Steuerabschnitt (24) eine Wandverdampfungsmenge auf die berechnete wandbenetzende-Gesamtmenge anwendet und die wandbenetzende-Harnstofflösung-Gesamtmenge ermittelt.

**5.** Das System zum Steuern einer Harnstoffeinspritzung einer selektive-katalytische-Reduktion-Vorrichtung nach Anspruch 1, wobei der zweite Fahrzustand zumindest einen von einer Abgastemperatur, einem Abgasfluss und einer Einspritzmenge aufweist.

**6.** Das System zum Steuern einer Harnstoffeinspritzung einer selektive-katalytische-Reduktion-Vorrichtung nach Anspruch 1, wobei der Steuerabschnitt (24) den Injektor (20) mit diskontinuierlichen an/aus Pulssignalen steuert.

**7.** Ein Verfahren zum Steuern einer Harnstoffeinspritzung einer sefektive-katalytische-Reduktion-Vorrichtung, aufweisend:

Ermitteln erster Fahrzustände eines Fahrzeugs (S103),
Ermitteln einer notwendigen Ammoniakmenge ($m_{NH3}$) durch Anwenden der ersten Fahrzustände des Fahrzeugs auf ein vorgegebenes NOx-Kennfeld (S104),
Ermitteln einer notwendigen Harnstofflösung-Menge ($m_{Harnstoff}$) durch Anwenden eines Ammoniak-Umwandlung-Koeffizienten der Harnstofflösung auf die ermittelte notwendige Ammoniakmenge (S105), und
Ermitteln einer Harnstofflösung-Einspritzendmenge, welche schließlich einzuspritzen ist, durch Anwenden einer wandbenetzende-Harnstofflösung-Gesamtmenge ($m_{Harnstoff\_Wand}$) auf die ermittelte notwendige Harnstofflösung-Menge ($m_{Harnstoff}$) (S106), wobei ein Teil der Harnstofflösung die Wand der Katalysatorvorrichtung (10) benetzt,
wobei die wandbenetzende-Harnstofflösung-Gesamtmenge ($m_{Harnstoff\_Wand}$) ermittelt wird durch Anwenden zweiter Fahrzustände auf einen Kennfeldwert und Berechnen einer wandbenetzende-Menge (S201) und Berechnen der wandbenetzende-Gesamtmenge durch Integrieren der berechneten wandbenetzende-Menge (S202).

**8.** Das Verfahren zum Steuern einer Harnstoffeinspritzung einer selektive-katalytische-Reduktion-Vorrichtung nach Anspruch 7, wobei die ersten Fahrzustände zumindest einen von Verbrennungsmotordrehzahl, Abgastemperatur, Abgasmenge und Verbrennungsdruck aufweisen.

**9.** Das Verfahren zum Steuern einer Harnstoffeinspritzung einer selektive-katalytische-Reduktion-Vorrichtung nach Anspruch 7, wobei der Ammoniak-Umwandlung-Koeffizient der Harnstofflösung 0,1955 ist.

**10.** Das Verfahren zum Steuern einer Harnstoffeinspritzung einer selektive-katalytische-Reduktion-Vorrichtung nach Anspruch 9, ferner aufweisend:

Anwenden einer Wandverdampfungsmenge auf die berechnete wandbenetzende-Gesamtmenge (S203) und Ermitteln der wandbenetzende-Harnstofflösung-Gesamtmenge (S204).

**11.** Das Verfahren zum Steuern einer Harnstoffeinspritzung einer selektive-katalytische-Reduktion-Vorrichtung nach Anspruch 10, wobei der zweite Fahrzustand zumindest einen von einer Abgastemperatur, einem Abgasfluss und einer Einspritzmenge aufweist.

**Revendications**

**1.** Système destiné à commander une injection d'urée d'un appareil de réduction catalytique sélective, comprenant :

un appareil catalytique (10) qui réduit le NOx inclus dans les gaz d'échappement ;

une partie commande (24) qui détermine une quantité d'ammoniac nécessaire en appliquant des premières conditions de conduite à une carte de NOx prédéterminée, et qui détermine une quantité de solution d'urée finale ($m_{UreaSolution}$) qui doit être injectée dans l'appareil catalytique, sur la base de la quantité d'ammoniac nécessaire ; et

un injecteur (20) qui injecte la quantité de solution d'urée finale déterminée dans l'appareil catalytique (10), dans lequel la partie commande (24) commande à l'injecteur (20) d'injecter la solution d'urée finale déterminée ; dans lequel la partie commande (24) détermine une quantité de solution d'urée nécessaire ($m_{Urea}$) en appliquant un coefficient de conversion d'ammoniac de la solution d'urée à la quantité d'ammoniac nécessaire déterminée ($m_{NH3}$), et détermine la quantité de solution d'urée finale en appliquant une quantité de solution d'urée mouillée sur la paroi totale ($m_{Urea\_Wall}$) à la quantité de solution d'urée nécessaire déterminée ($m_{Urea}$), dans lequel une partie de la solution d'urée est mouillée sur la paroi de l'appareil catalytique (10) ; et

dans lequel la partie commande (24) détermine la quantité de solution d'urée mouillée sur la paroi totale ($m_{Urea\_Wall}$) en appliquant des secondes conditions de conduite à une valeur de carte, et en calculant une quantité mouillée sur la paroi, et en calculant la quantité mouillée sur la paroi totale en intégrant la quantité mouillée sur la paroi calculée.

2. Système destiné à commander une injection d'urée d'un appareil de réduction catalytique sélective selon la revendication 1, dans lequel le coefficient de conversion d'ammoniac de la solution d'urée est égal à 0,1955.

3. Système destiné à commander une injection d'urée d'un appareil de réduction catalytique sélective selon la revendication 1, dans lequel les premières conditions de conduite comprennent au moins l'une d'une vitesse du moteur, d'une température des gaz d'échappement, d'une quantité de gaz d'échappement et d'une pression de combustion.

4. Système destiné à commander une injection d'urée d'un appareil de réduction catalytique sélective selon la revendication 1, dans lequel la partie commande (24) applique une quantité de vaporisation sur la paroi à la quantité mouillée sur la paroi totale calculée, et détermine la quantité de solution d'urée mouillée sur la paroi totale.

5. Système destiné à commander une injection d'urée d'un appareil de réduction catalytique sélective selon la revendication 1, dans lequel les secondes conditions de conduite comprennent au moins l'un d'une température des gaz d'échappement, d'un flux de gaz d'échappement et d'une quantité d'injection.

6. Système destiné à commander une injection d'urée d'un appareil de réduction catalytique sélective selon la revendication 1, dans lequel la partie commande (24) commande l'injecteur (20) avec des signaux impulsionnels tout ou rien intermittents.

7. Procédé destiné à commander une injection d'urée d'un appareil de réduction catalytique sélective, comprenant les étapes consistant à :

   détecter des premières conditions de conduite d'un véhicule (S103);
   déterminer une quantité d'ammoniac nécessaire ($m_{NH3}$) en appliquant les premières conditions de conduite du véhicule à une carte de NOx prédéterminée (S104) ;
   déterminer une quantité de solution d'urée nécessaire ($m_{Urea}$) en appliquant un coefficient de conversion d'ammoniac de solution d'urée à la quantité d'ammoniac nécessaire déterminée (S105) ; et
   déterminer une quantité de solution d'injection d'urée finale qui doit être finalement injectée en appliquant une quantité de solution d'urée mouillée sur la paroi totale ($m_{Urea\_Wall}$) à la quantité quantité de solution d'urée nécessaire ($m_{Urea}$) déterminée (S106), dans lequel une partie de la solution d'urée est mouillée sur la paroi de l'appareil catalytique (10) ;
   dans lequel la quantité de solution d'urée mouillée sur la paroi totale ($m_{Urea\_Wall}$) est déterminée en appliquant des secondes conditions de conduite à une valeur de carte, et en calculant une quantité mouillée sur la paroi (S201), et en calculant la quantité mouillée sur la paroi totale en intégrant la quantité mouillée sur la paroi calculée (S202).

8. Procédé destiné à commander une injection d'urée d'un appareil de réduction catalytique sélective selon la revendication 7, dans lequel les premières conditions de conduite comprennent au moins l'une d'une vitesse du moteur, d'une température des gaz d'échappement, d'une quantité de gaz d'échappement et d'une pression de combustion.

9. Procédé destiné à commander une injection d'urée d'un appareil de réduction catalytique sélective selon la revendication 7, dans lequel le coefficient de conversion d'ammoniac de la solution d'urée est égal à 0,1955.

**10.** Procédé destiné à commander une injection d'urée d'un appareil de réduction catalytique sélective selon la revendication 9, comprenant en outre les étapes consistant à :

appliquer une quantité de vaporisation sur la paroi à la quantité mouillée sur la paroi totale calculée (S203) ; et
déterminer la quantité de solution d'urée mouillée sur la paroi totale (S204).

**11.** Procédé destiné à commander une injection d'urée d'un appareil de réduction catalytique sélective selon la revendication 10, dans lequel les secondes conditions de conduite comprennent au moins l'un d'une température des gaz d'échappement, d'un flux de gaz d'échappement et d'une quantité d'injection.

# FIG.1

FIG.2

```
        ┌─────────────────────────┐
        │          Start          │
        └─────────────────────────┘
                     │
    ┌──────────────────────────────────────┐
    │            Start engine              │──S101
    └──────────────────────────────────────┘
                     │
    ┌──────────────────────────────────────┐
    │      Activation of catalyst apparatus │──S102
    └──────────────────────────────────────┘
                     │
    ┌──────────────────────────────────────┐
    │        analysis of driving condition  │──S103
    └──────────────────────────────────────┘
                     │
    ┌──────────────────────────────────────┐
    │ Determination of necessary ammonia amount │──S104
    └──────────────────────────────────────┘
                     │
    ┌──────────────────────────────────────┐
    │ Determination of necessary urea solution amount │──S105
    └──────────────────────────────────────┘
                     │
    ┌──────────────────────────────────────┐
    │        Determination of the urea       │
    │   solution amount that is to be injected │──S106
    └──────────────────────────────────────┘
                     │
    ┌──────────────────────────────────────┐
    │      Injection control of urea solution │──S107
    └──────────────────────────────────────┘
                     │
        ┌─────────────────────────┐
        │           End           │
        └─────────────────────────┘
```

# FIG.3

```
          ┌─────────────┐
          │    Start     │
          └─────────────┘
                 │
  ┌──────────────────────────────┐
  │ Calculation of wall-wetted amount │──S201
  └──────────────────────────────┘
                 │
  ┌────────────────────────────────────┐
  │ Calculation of total wall-wetted amount │──S202
  └────────────────────────────────────┘
                 │
  ┌──────────────────────────────┐
  │   Calculation of urea solution   │
  │ amount that is vaporized on wall │──S203
  └──────────────────────────────┘
                 │
  ┌──────────────────────────────┐
  │  calculation of total wall-wetted │
  │     urea solution amount      │──S204
  └──────────────────────────────┘
                 │
          ┌─────────────┐
          │     End      │
          └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070131623
- EP 1712764 A1